# FASCICULE DE BREVET EUROPEEN

(11) **EP 0 684 073 B1**
(45) Date de publication et mention de la délivrance du brevet: **01.03.2000**
(21) Numéro de dépôt: 95401180.5
(22) Date de dépôt: 22.05.1995
(51) Int. Cl.: B01J 23/10, C01G 25/00, B01D 53/62, B01D 53/86

(54) **Composés à base d'alumine, d'oxyde de cerium et d'oxyde de zirconium à réductibilité élevée, leur procédé de préparation et leur utilisation dans la préparation de catalyseurs**
Hoch reduzierbare Alumine, Ceroxid und Zirconiumoxid Zusammensetzungen, Verfahren zu deren Herstellung und ihre Verwendung zur Herstellung von Katalysatoren
Highly reducible alumina, cerium oxide and zirconiumoxide compounds, process for their preparation and their use for making catalysts

(30) Priorité: 27.05.1994 FR 9406447
(43) Date de publication de la demande: 29.11.1995
(73) Titulaire: RHODIA CHIMIE, 92408 Courbevoie Cédex (FR)
(72) Inventeur: Chopin, Thierry, F-95320 Saint-Leu-La-Foret (FR); Touret, Olivier, F-17000 Rochelle (FR); Vilmin, Gabriel, Princeton NJ 08540 (US)
(74) Mandataire: Dubruc, Philippe

(56) Documents cités:
- EP-A- 0 251 752
- EP-A- 0 588 691
- FR-A- 2 590 887
- JOURNAL OF ALLOYS AND COMPOUNDS, vol. 193, 1993 pages 298-299, T. MUROTA ET AL.: 'Production method of cerium oxide with high storage capacity of oxygen and its mechanism'

## Description

La présente invention concerne des composés à base d'alumine, d'oxyde de cerium et d'oxyde de zirconium à réductibilité élevée, leur procédé de préparation et leur utilisation comme catalyseur notamment pour le traitement des gaz d'échappement des moteurs à combustion interne.

On sait que les catalyseurs peuvent se présenter sous la forme d'un support tel qu'un monolithe réfractaire en céramique ou un substrat métallique pourvu d'un revêtement généralement constitué d'un matériau susceptible de former une couche poreuse comme l'alumine; d'éléments catalytiquement actifs comme les métaux précieux et d'autres éléments comme des oxydes de terres rares, notamment l'oxyde de cérium, ou comme l'oxyde de zirconium qui peuvent exercer une fonction catalytique propre et/ou une fonction de support pour les métaux précieux. Ce revêtement est désigné sous le terme de " wash-coat ".

L'ensemble alumine - oxydes ou le composé à base de ces éléments doit présenter un certain nombre de qualités pour pouvoir conférer l'efficacité nécessaire au catalyseur. Une de ces qualités est la réductibilité. On entend par réductibilité ici et pour le reste de la description, la capacité à se réduire en atmosphère réductrice et à se réoxyder en atmosphère oxydante. Cette réductibilité peut se mesurer par la capacité à capter l'hydrogène. Une autre qualité est la stabilité à la température. On entend par stabilité d'une part la stabilité de la surface spécifique du composé. En effet, ce composé doit pouvoir conserver une surface suffisamment grande après avoir été exposé à une température élevée. On entend d'autre part la stabilité de la capacité de stockage de l'hydrogène ou de l'oxygène. De même que pour la surface spécifique, cette capacité ne doit pas varier sensiblement après plusieurs cycles d'exposition à haute température.

EP-A-251752 décrit l'utilisation de l'alumine dans des teneurs faibles comme stabilisant de la surface spécifique de l'oxyde de cérium.

Ce document n'est, toutefois, pas concerné par la réductibilité des produits décrits.

L'article de Murota et al. J. of Alloys and Compounds 193 (1993), 298-299 décrit la variation de la capacité de stockage de l'oxygène de composition à base d'oxydes de cérium et de zirconium. Cet article ne traite ni du problème de la réductibilité, ni de celui de la stabilisation de la capacité de stockage de l'oxygène.

L'objet de l'invention est donc d'offrir des composés à réductibilité et stabilité améliorées.

Dans ce but, le composé selon l'invention comprenant de l'alumine, de l'oxyde de cérium et de l'oxyde de zirconium, est caractérisé en ce qu'il présente une teneur en alumine d'au moins 10% en poids, en ce qu'il contient en outre de l'oxyde de praséodyme et en ce qu'il présente une capacité de captage de l'hydrogène d'au moins 10 ml/g jusqu'à une température d'au moins 1000°C, la variation de cette capacité de captage mesurée après deux cycles consécutifs d'exposition à une température d'au moins 1000°C étant d'au plus 50%.

Par ailleurs, le procédé de préparation d'un composé selon l'invention est caractérisé en ce qu'il comprend les étapes suivantes :
- on prépare un premier mélange comprenant un acétate de cérium et un sel ou un sol de zirconium avec un sel ou un sol de praséodyme et éventuellement avec un sel ou un sol d'un autre élément précité;
- on met en contact le premier mélange avec un milieu basique et on maintient le milieu réactionnel ainsi formé à un pH basique;
- on sépare éventullement le précipité formé du milieu réactionnel;
- on forme un second mélange comprenant le précipité obtenu et de l'alumine;
- on sèche par atomisation le second mélange ainsi formé;
- on calcine le produit sec obtenu.

L'invention concerne aussi un précurseur d'un composé du type ci-dessus obtenu à l'issue de l'étape de séchage du second mélange du procédé qui vient d'être décrit.

Enfin, l'invention concerne l'utilisation pour la préparation d'un catalyseur, notamment pour le traitement des gaz d'échappement des moteurs à combustion interne, d'un composé du type mentionné ci-dessus.

D'autres caractéristiques, détails et avantages de l'invention apparaîtront encore plus complètement à la lecture de la description qui va suivre, ainsi que des divers exemples concrets mais non limitatifs destinés à l'illustrer.

Les composés de l'invention sont à base d'alumine, d'oxyde de cérium et d'oxyde de zirconium.

Ils peuvent toutefois comprendre des éléments additionnels. Ces éléments peuvent être choisi parmi le bismuth, les terres rares et les éléments du groupe VIII de la classification périodique des éléments.

Par terre rare on entend ici les éléments du groupe constitué par l'yttrium et les éléments de la classification périodique de numéro atomique compris inclusivement entre 57 et 71. La classification périodique des éléments à laquelle il est fait référence est celle publiée dans le Supplément au Bulletin de la Société Chimique de France n° 1 (janvier 1966).

Parmi ces éléments additionnels on peut aussi trouver des éléments utilisés pour la stabilisation de l'alumine. Ces éléments peuvent être choisis parmi le baryum, le silicium et le zirconium. On notera que les terres rares peuvent aussi être utilisées pour la stabilisation de l'alumine.

Comme éléments additionnels, on peut citer plus particulièrement le lanthane, le praséodyme et le fer.

La proportion d'alumine dans le composé de l'invention est de préférence d'au moins 10% en poids par rapport à l'ensemble du composé. Elle est habituellement d'au plus 90% et plus particulièrement comprise entre 15 et 80%. Selon les modes de réalisation particuliers de l'invention, cette proportion peut être comprise entre 15 et 40%, 40 et 60% et 60 et 80%. En ce qui concerne les proportions respectives du cérium et des autres éléments restants, c'est à dire zirconium et autres éléments additionnels, le cérium représente de préférence au moins 50% en poids de l'ensemble cérium - autres éléments.

Les composés de l'invention présentent un certain nombre de caractéristiques intéressantes qui vont être étudiées plus précisément.

Une caractéristique essentielle est leur réductibilité stabilisée. Par réductibilité stabilisée, on entend le maintien de la capacité de captage de l'hydrogène à une valeur suffisante après plusieurs cycles d'exposition du composé à une température élevée qui peut aller au moins jusqu'à 1000°C et sur une durée pouvant aller jusqu'à 6 heures. Plus précisément, la différence entre les valeurs de capacité de captage de l'hydrogène mesurées entre deux cycles consécutifs est d'au plus 50%, plus particulièrement d'au plus 25% et encore plus particulièrement d'au plus 10%.

Par ailleurs, les composés de l'invention présentent en général une capacité de captage de l'hydrogène d'au moins 10ml/g de composé et de préférence d'au moins 20ml/g et plus particulièrement comprise entre 20 et 50ml/g.

Les composés de l'invention peuvent avoir une densité apparente très variable. A titre d'exemple, cette densité peut être d'au moins 0,2g/cm³. Cette densité peut être plus particulièrement comprise entre 0,4 et 1,4g/cm³ et encore plus particulièrement entre 0,5 et 0,8g/cm³.

Une autre caractéristique intéressante des composés de l'invention est leur surface spécifique. On entend ici par surface spécifique, la surface spécifique B.E.T. determinée par adsorption d'azote conformément à la norme ASTM D 3663-78 établie à partir de la méthode BRUNAUER - EMMETT- TELLER décrite dans le périodique "The Journal of the American Society, 60, 309 (1938)". Les surfaces spécifiques des produits de l'invention sont données ci-dessous pour les différents modes de réalisation après calcination à 900°C 6 heures, 940°C 3 heures et 1050°C 2 heures. Les valeurs préférentielles sont données entre parenthèses.

| Proportion d'alumine en % en poids | 900°C | 940°C | 1050°C |
|---|---|---|---|
| | Surface (m²/g) | | |
| 15-40 | >25 (>35) | >25 (>35) | >15 (>25) |
| 40-60 | >50 (>60) | >50 (>60) | >35 (>45) |
| 60-85 | >80 (>90) | >80 (>90) | >50 (>60) |

Une autre caractéristique des composés selon un mode de réalisation particulier de l'invention réside dans la manière dont sont dispersés dans l'alumine les autres éléments qui rentrent dans leur constitution. Cette dispersion est telle que les domaines d'hétérogénéité sont inférieurs à 100nm², plus particulièrement inférieurs à 50nm² et encore plus particulièrement inférieurs à 25nm². Ceci signifie qu'il n'y a pas de différence dans la composition chimique des produits de l'invention entre des zones de surface des valeurs données ci-dessus. Ces caractéristiques d'homogénéité sont déterminées par analyse MET-EDS. Plus particulièrement, le domaine d'hétérogénéité a été mesuré par la méthode de cartographie par spectroscopie à dispersion d'énergie (EDS) en utilisant une microsonde de microscopie électronique à transmission (MET).

Selon un autre mode de réalisation particulier de l'invention, le zirconium et le cas échéant les éléments additionnels, sont présents dans le composé au moins partiellement sous forme de solution solide dans le cérium.

Enfin, selon un mode de réalisation particulièrement avantageux de l'invention, le composé de l'invention comprend outre les oxydes de cérium et de zirconium, les oxydes de praséodyme et de fer.

Le procédé de préparation des composés de l'invention va maintenant être décrit.

La première étape du procédé consiste à préparer, sous forme habituellement d'une solution ou suspension, un mélange de l'acétate de cérium et d'un sel ou d'un sol de zirconium avec éventuellement un sel ou un sol d'un autre élément additionnel du type décrit ci-dessus.

En ce qui concerne les sels, on utilise de préférence l'acétate. On peut mentionner comme autres sels les chlorures ou les sels d'acides carboxyliques comme les oxalates ou les formiates. Lorsque cela est possible, on utilise de préférence un acétate.

L'étape suivante consiste à mettre en contact le mélange précité avec un milieu basique. Par milieu basique on entend tout milieu présentant un pH supérieur à 7. Le milieu basique sera habituellement une solution aqueuse contenant une base. On peut utiliser comme base les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

La mise en contact de la solution ou du mélange précité et du milieu basique se fait dans des conditions telles que le pH du mélange réactionnel que l'on forme ainsi reste basique.

De préférence, cette valeur de pH sera d'au moins 9. Elle pourra être plus particulièrement d'au plus 11. Plus particulièrement encore, cette valeur pourra être comprise entre 9,5 et 11.

La mise en contact du mélange précité et du milieu basique peut se faire par introduction du mélange dans le milieu basique. Il est aussi possible de réaliser la mise en contact en continu, la condition de pH étant réalisée en réglant les débits respectifs du mélange et de milieu basique.

Il est possible, selon une variante particulière de l'invention, de travailler dans des conditions telles que lors de la mise en contact de la solution ou du mélange avec le milieu basique on maintienne constant le pH du milieu réactionnel ainsi formé. De telles conditions peuvent être obtenues en ajoutant lors de l'introduction du mélange dans le milieu basique une quantité supplémentaire de base au mélange formé.

La mise en contact se fait habituellement à température ambiante.

A l'issue de la réaction, on obtient un précipité ou une suspension qui peut être séparé, si nécessaire, du mélange réactionnel par tout moyen connu. Le produit séparé peut être lavé.

L'étape suivante du procédé consiste à former un second mélange avec le produit obtenu précédemment et de l'alumine.

On peut utiliser ici tout type d'alumine susceptible de présenter une surface spécifique suffisante pour une application en catalyse. On peut mentionner les alumines issues de la déshydratation rapide d'au moins un hydroxyde d'aluminium tel que la bayerite, l'hydrargillite ou gibbsite, la nordstrandite et/ou d'au moins un oxyhydroxyde d'aluminium tel que la boehmite, la pseudoboehmite et le diaspore.

Selon un mode de réalisation particulier de l'invention, on utilise une alumine stabilisée. Comme élément stabilisant on peut citer les terres rares, le baryum, le silicium et le zirconium. Comme terre rare on peut mentionner tout particulièrement le lanthane ou le mélange lanthane néodyme.

La préparation de l'alumine stabilisée se fait d'une manière connue en soi, notamment par imprégnation de l'alumine par des solutions de sels, comme les nitrates, des éléments stabilisants précités ou encore par coséchage d'un précurseur d'alumine et de sels de ces éléments puis calcination.

On peut citer par ailleurs une autre préparation de l'alumine stabilisée dans laquelle la poudre d'alumine issue de la déshydratation rapide d'un hydroxyde ou d'un oxyhydroxyde d'aluminium est soumise à une opération de mûrissement en présence d'un agent stabilisant constitué par un composé du lanthane et, éventuellement, un composé du néodyme, ce composé pouvant être plus particulièrement un sel. Le mûrissement peut se faire par mise en suspension de l'alumine dans l'eau puis chauffage à une température comprise par exemple entre 70 et 110°C. Après le mûrissement, l'alumine est soumise à un traitement thermique.

Une autre préparation consiste en un type de traitement similaire mais avec le baryum.

La teneur en stabilisant exprimée en poids d'oxyde de stabilisant par rapport à l'alumine stabilisée est comprise généralement entre 1,5 et 15%, plus particulièrement entre 2,5 et 11%.

Le mélange d'alumine et du produit issu de l'étape de précipitation est ensuite séché.

Le séchage se fait de préférence par atomisation. c'est à dire par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions Gerge Godwin - London).

On notera que l'on peut également mettre en oeuvre l'opération d'atomisation-séchage au moyen d'un réacteur "flash", par exemple du type mis au point par la Demanderesse et décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

Selon les débits respectifs des gaz et du mélange à sécher, la température d'entrée des gaz dans le réacteur "flash" est comprise entre 400 et 900°C et plus particulièrement entre 600 et 800°C, la température du solide séché entre 100 et 250°C, de préférence entre 125 et 200°C.

A l'issue de cette étape de séchage, on obtient un produit sec qui est un précurseur des composés de l'invention.

On passe du précurseur au composé selon l'invention par calcination. Cette calcination se fait à une température suffisante pour obtenir les éléments de la composition sous forme d'oxydes dans le composé. La durée de la calcination est d'autant plus courte que la température est élevée. La calcination se fait habituellement sous air. Le composé selon l'invention est généralement obtenu à partir de 300°C et plus particulièrement de 600°C.

Le composé ainsi obtenu peut être utilisé dans la préparation de catalyseur. Il peut ainsi entrer dans la fabrication de catalyseurs, utilisables notamment pour le traitement des gaz d'échappement des moteurs à combustion interne, comportant un substrat et un revêtement. Ce substrat peut être du type métallique, ce peut être aussi un monolithe réfractaire en céramique. Le revêtement peut être préparé par les méthodes classiques de fabrication de "wash-coat" à partir d'un composé de l'invention.

Des exemples concrets vont maintenant être donnés. Sauf indication contraire, les proportions et pourcentages donnés dans les exemples sont des proportions et pourcentages en poids.

La mesure de la capacité de captage de l'hydrogène est faite par réduction programmée en température de la manière suivante. On utilise un réacteur en silice et un échantillon de 1,5g. Le gaz est l'hydrogène à 5% en volume dans l'argon et avec un débit de 20ml/mn. La montée en température se fait de l'ambiante à 1000°C à raison de 10°C/mn. La détection du signal se fait avec un détecteur de conductivité thermique à 70mA. Le captage de l'hydrogène est calculé à partir de la surface manquante du signal d'hydrogène de la ligne de base à la température ambiante à la ligne de base à 1000°C.

Pour mesurer la stabilité de la capacité de captage de l'hydrogène, on calcine, à l'issue de la première mesure faite dans les conditions qui viennent d'être décrites, l'échantillon sous air à 1000°C en four statique pendant 6 heures. Cet échantillon est ensuite soumis à une autre mesure de capacité de captage de l'hydrogène toujours dans les mêmes conditions.

### EXEMPLE 1

Cet exemple concerne la préparation d'un composé de composition suivante :
50% Al₂O₃/La₂O₃ (97/3%)
50% CeO₂/ZrO₂/Pr₆O₁₁/Fe₂O₃ (56/30/7/7 %)

- Préparation de l'alumine
   Dans un réacteur de 2I on ajoute 160,1g d'un précurseur d'alumine (Versal 250 de la société La Roche à 72,7% dAl₂O₃) à 1200g d'eau sous agitation. 13,38g de solution de nitrate de lanthane (26,91 % en La₂O₃) y sont ajoutés et le volume de la bouillie est amené à 1850ml avec de l'eau. Cette bouillie est atomisée sous agitation constante (Température de sortie de 110°C). La poudre résultante est calcinée 2 heures à 600°C. On obtient 120g d'alumine de transition présentant une surface de 266m²/g.
- Préparation du précurseur
   Dans un réacteur de 2I comprenant une petite quantité d'eau, on ajoute les produits suivants :
   298,61g d'acétate de cérium (12,19% en CeO₂)
   9,63g d'acétate de praséodyme (47,27% en oxyde de praséodyme)
   83,56g d'acétate de fer (5,44% en Fe₂O₃)
   89,68g d'acétate de zirconium (21,74% en ZrO₂)

   Le volume est amené à 1350ml avec de l'eau et le mélange est agité jusqu'à dissolution complète.
   Dans un réacteur de 4I on dilue 415g d'hydroxyde d'ammonium (29% en NH₃) dans de l'eau jusqu'à un volume total de 2600ml.
   Sous agitation vigoureuse, on ajoute la solution d'acétates préalablement préparée à la solution d'ammoniaque. Le pH du milieu réactionnel est de 10. Un précipité marron est obtenu.
   A la bouillie ainsi obtenue on ajoute 65g de l'alumine préparée précédemment. Le mélange est amené à un volume total de 4I sous agitation vigoureuse et est atomisé (Température d'entrée des gaz 250°C, température de sortie 110°C). Un précurseur marron est obtenu.
- Préparation du composé
   Le précurseur est calciné à 600°C pendant 2 heures. On obtient un composé présentant une densité apparente de 0,5g/cm³.
   Après un traitement thermique supplémentaire de 2 heures à 900°C, la poudre présente une surface spécifique de 80,8m²/g, cette surface est de 77,5m²/g après calcination 3 heures à 940°C et de 52m²/g après calcination 2 heures à 1050°C. La capacité de captage de l'hydrogène est de 20ml/g. On observe la même capacité lors d'un second cycle identique.Enfin, l'analyse RX montre que le zirconium, le fer et le praséodyme sont présents sous forme de solution solide dans le cérium.

### EXEMPLES 2 à 7

On procède de la même manière que dans l'exemple 1 en faisant varier simplement les proportions des différents éléments. Les résultats sont donnés dans le tableau ci-dessous.

| Exemples | Composition (en %) | Densité (g/cm³) | Surface spécifique après 3h à 940°C et 2h à 1050°C (m²/g) | Capacité de captage de l'hydrogène (ml H₂/g) |
|---|---|---|---|---|
| 2 | 70 Al₂O₃/La₂O₃ (97/3) 30 CeO₂/ZrO₂/Pr₆O₁₁/Fe₂O₃ (56/30/7/7) | 0,44 | 122,3 76 | 12,3 |
| 3 | 60 Al₂O₃/La₂O₃ (97/3) 40 CeO₂/ZrO₂/Pr₆O₁₁/Fe₂O₃ (56/30/7/7) | 0,49 | 95,7 65 | 16,3 |
| 4 (COMPARATIF) | 40 Al₂O₃/La₂O₃ (97/3) 60 CeO₂/ZrO₂/Fe₂O₃ (60,5/32,5/7) | | | 23,5 (cycle 1) 18,4 (cycle 2) |
| 5 | 40 Al₂O₃/La₂O₃ (97/3) 60 CeO₂/ZrO₂/Pr₆O₁₁/Fe₂O₃ (56/30/7/7 ) | 0,53 | 63,6 41 | 24,5 (cycle 1) 23,6 (cycle 2) |
| 6 | 30 Al₂O₃/La₂O₃ (97/3) 70 CeO₂/ZrO₂/Pr₆O₁₁/Fe₂O₃ (56/30/7/7 ) | 0,62 | 49 28 | 27,7 (cycle 1) 26,2 (cycle 2) |
| 7 | 20 Al₂O₃/La₂O₃ (97/3) 80 CeO₂/ZrO₂/Pr₆O₁₁/Fe₂O₃ (56/30/7/7 ) | 0,79 | 32,8 16 | 32,5 (cycle 1) 29,4 (cycle 2) |

Pour les exemples 2 et 3 la capacité de captage de l'hydrogène ne varie pas sensiblement entre deux cycles. De plus, pour le composé de l'exemple 5 le zirconium, le fer et le praséodyme sont présents sous forme de solution solide dans le cérium.

## Revendications

1. Composé comprenant de l'alumine, de l'oxyde de cérium et de l'oxyde de zirconium, caractérisé en ce qu'il présente une teneur en alumine d'au moins 10% en poids, en ce qu'il contient en outre de l'oxyde de praséodyme et en ce qu'il présente une capacité de captage de l'hydrogène d'au moins 10ml/g jusqu'à une température d'au moins 1000°C, la variation de cette capacité de captage mesurée après deux cycles consécutifs d'exposition à une température d'au moins 1000°C étant d'au plus 50%.

2. Composé selon la revendication 1, caractérisé en ce qu'il comprend en outre de l'oxyde de fer.

3. Composé selon la revendication 1 ou 2, caractérisé en ce que la variation de sa capacité de captage de l'hydrogène mesurée après deux cycles consécutifs d'exposition à une température d'au moins 1000°C est d'au plus 25%.

4. Composé selon la revendication 1, 2 ou 3, caractérisé en ce qu'il présente une capacité de captage de l'hydrogène d'au moins 20ml/g jusqu'à une température d'au moins 1000°C.

5. Composé selon l'une des revendications précédentes, caractérisé en ce qu'il comprend en outre un oxyde d'un autre élément choisi parmi le bismuth, les terres rares, notamment le lanthane, le baryum, le silicium et les éléments du groupe VIII de la classification périodique des éléments.

6. Composé selon l'une des revendications précédentes, caractérisé en ce qu'il présente une homogénéité chimique telle que les domaines d'hétérogénéité sont inférieurs à 100nm², plus particulièrement inférieur à 50nm².

7. Procédé de préparation d'un composé selon l'une des revendications précédentes, caractérisé en ce qu'il comprend les étapes suivantes :
- on prépare un premier mélange comprenant un acétate de cérium et un sel ou un sol de zirconium avec un sel ou un sol de praséodyme et éventuellement avec un sel ou un sol d'un autre élément précité;
- on met en contact le premier mélange avec un milieu basique et on maintient le milieu réactionnel ainsi formé à un pH basique;
- on sépare éventuellement le précipité formé du milieu réactionnel;
- on forme un second mélange comprenant le précipité obtenu et de l'alumine;
- on sèche par atomisation le second mélange ainsi formé;
- on calcine le produit sec obtenu.

8. Procédé selon la revendication 7, caractérisé en ce qu'on utilise comme milieu basique une solution d'ammoniaque.

9. Procédé selon la revendication 7 ou 8, caractérisé en ce qu'on maintient le pH du mélange réactionnel à une valeur d'au moins 9 et plus particulièrement comprise entre 9,5 et 11.

10. Procédé selon l'une des revendications 7 à 9, caractérisé en ce qu'on utilise une alumine stabilisée avec un élément choisi parmi les terres rares, le baryum, le silicium et le zirconium.

11. Précurseur d'un composé selon l'une des revendications 1 à 6, caractérisé en ce qu'il est obtenu par un procédé qui comprend les étapes suivantes :
- on prépare un premier mélange comprenant un acétate de cérium et un sel ou un sol de zirconium avec un sel ou un sol de praséodyme et éventuellement avec un sel ou un sol d'un autre élément précité;
- on met en contact le premier mélange avec un milieu basique et on maintient le milieu réactionnel ainsi formé à un pH basique;
- on sépare éventuellement le précipité formé du milieu réactionnel;
- on forme un second mélange comprenant le précipité obtenu et de l'alumine;
- on sèche par atomisation le second mélange ainsi formé.

12. Utilisation pour la préparation d'un catalyseur, notamment pour le traitement des gaz d'échappement des moteurs à combustion interne, d'un composé selon l'une des revendications 1 à 6.

13. Catalyseur, notamment pour le traitement des gaz d'échappement des moteurs à combustion interne, comportant un substrat et un revêtement caractérisé en ce que le revêtement a été obtenu en utilisant un composé selon l'un des revendications 1 à 6.

## Patentansprüche

1. Verbindung, umfassend Aluminiumoxid, Ceroxid und Zirconiumoxid, dadurch gekennzeichnet, daß sie einen Gehalt an Aluminiumoxid von mindestens 10 Gew.-% aufweist, daß sie darüber hinaus Praseodymoxid enthält und daß sie eine Wasserstoffaufnahmekapazität von mindestens 10 ml/g bis zu einer Temperatur von mindestens 100°C aufweist, wobei die Schwankung dieser Aufnahmekapazität, gemessen nach zwei aufeinanderfolgenden Zyklen einer Exposition gegenüber einer Temperatur von mindestens 1000°C, höchstens 50% beträgt.

2. Verbindung nach Anspruch 1, dadurch gekennzeichnet, daß sie darüber hinaus Eisenoxid umfaßt.

3. Verbindung nach Anspruch 1 oder 2, dadurch gekennzeichnet, daß die Schwankung ihrer Wasserstoffaufnahmekapazität, gemessen nach zwei aufeinanderfolgenden Zyklen einer Exposition gegenüber einer Temperatur von mindestens 1000°C, höchstens 25% beträgt.

4. Verbindung nach Anspruch 1, 2 oder 3, dadurch gekennzeichnet, daß sie eine Wasserstoffaufnahmekapazität von mindestens 20 ml/g bis zu einer Temperatur von mindestens 1000°C aufweist.

5. Verbindung nach einem der vorangegangenen Ansprüche, dadurch gekennzeichnet, daß sie darüber hinaus ein Oxid eines anderen Elements, ausgewählt aus Bismut, den seltenen Erden, insbesondere Lanthan, Barium, Silicium und den Elementen der Gruppe VIII des Periodensystems der Elemente, umfaßt.

6. Verbindung nach einem der vorangegangenen Ansprüche, dadurch gekennzeichnet, daß sie eine solche chemische Homogenität aufweist, daß die Heterogenitätsdomänen unter 100 nm², insbesondere unter 50 nm² sind.

7. Verfahren zur Herstellung einer Verbindung nach einem der vorangegangenen Ansprüche, dadurch gekennzeichnet, daß es die folgenden Schritte umfaßt:
- man stellt eine erste Mischung, umfassend ein Ceracetat und ein Salz oder ein Sol von Zirconium, mit einem Salz oder einem Sol von Praseodym und gegebenenfalls mit einem Salz oder einem Sol eines anderen vorstehend aufgeführten Elements her,
- man bringt die erste Mischung mit einem basischen Medium in Kontakt und man hält das so gebildete Reaktionsmedium bei einem basischen pH,
- man trennt gegebenenfalls das gebildete Präzipitat von dem Reaktionsmedium ab,
- man bildet eine zweite Mischung, die das erhaltene Präzipitat und Aluminiumoxid umfaßt,
- man trocknet die so gebildete zweite Mischung durch Zerstäubung,
- man kalziniert das erhaltene trockene Produkt.

8. Verfahren nach Anspruch 7, dadurch gekennzeichnet, daß man als basisches Medium eine Ammoniaklösung verwendet.

9. Verfahren nach Anspruch 7 oder 8, dadurch gekennzeichnet, daß man den pH der Reaktionsmischung bei einem Wert von mindestens 9 und insbesondere zwischen 9,5 und 11 hält.

10. Verfahren nach einem der Ansprüche 7 bis 9, dadurch gekennzeichnet, daß man ein mit einem Element, ausgewählt unter den seltenen Erden, Barium, Silicium und Zirconium, stabilisiertes Aluminiumoxid verwendet.

11. Vorläufer einer Verbindung nach einem der Ansprüche 1 bis 6, dadurch gekennzeichnet, daß er durch ein Verfahren erhalten wird, das die folgenden Schritte umfaßt:
- man stellt eine erste Mischung, umfassend ein Ceracetat und ein Salz oder ein Sol von Zirconium, mit einem Salz oder einem Sol von Praseodym und gegebenenfalls mit einem Salz oder einem Sol eines anderen vorstehend aufgeführten Elements her,
- man bringt die erste Mischung mit einem basischen Medium in Kontakt und man hält das so gebildete Reaktionsmedium bei einem basischen pH,
- man trennt gegebenenfalls das gebildete Präzipitat von dem Reaktionsmedium ab,
- man bildet eine zweite Mischung, die das erhaltene Präzipitat und Aluminiumoxid umfaßt,
- man trocknet die so gebildete zweite Mischung durch Zerstäubung.

12. Verwendung einer Verbindung nach einem der Ansprüche 1 bis 6 für die Herstellung eines Katalysators, insbesondere für die Behandlung der Abgase von Verbrennungsmotoren.

13. Katalysator insbesondere für die Behandlung der Abgase von verbrennungsmotoren, der einen Träger und einen Überzug umfaßt, dadurch gekennzeichnet, daß der Überzug unter Verwendung einer Verbindung nach einem der Ansprüche 1 bis 6 erhalten worden ist.

## Claims

1. A compound comprising alumina, cerium oxide and zirconium oxide, characterized in that it has an alumina content of at least 10% by weight, in that it also contains praseodymium oxide and in that it has a hydrogen capture capacity of at least 10 ml/g up to a temperature of at least 1000°C, the variation in this capture capacity, measured after two consecutive cycles of exposure to a temperature of at least 1000°C, being at most 50%.

2. A compound according to claim 1, characterized in that it further comprises iron oxide.

3. A compound according to claim 1 or claim 2, characterized in that the variation in its hydrogen capture capacity, measured after two consecutive cycles of exposure to a temperature of at least 1000°C, is at most 25%.

4. A compound according to claim 1, 2 or 3, characterized in that it has a hydrogen capture capacity of at least 20 ml/g up to a temperature of at least 1000°C.

5. A compound according to any one of the preceding claims, characterized in that it further comprises an oxide of another element selected from bismuth, rare earths, in particular lanthanum, barium, silicon and elements from group VIII of the periodic table.

6. A compound according to any one of the preceding claims, characterized in that its chemical homogeneity is such that the heterogeneous regions are smaller than 100 nm², more particularly smaller than 50 nm².

7. A process for preparing a compound according to any one of the preceding claims, characterized in that it comprises the following steps:
• preparing a first mixture comprising a cerium acetate and a zirconium salt or sol with a praseodymium salt or sol and optionally with a salt or a sol of another of said elements;
• bringing the first mixture into contact with a basic medium and maintaining the reaction medium formed at a basic pH;
• optionally, separating the precipitate formed from the reaction medium;
• forming a second mixture comprising the precipitate obtained and alumina;
• drying the second mixture formed by spray drying;
• calcining the dry product obtained.

8. A process according to claim 7, characterized in that the basic medium is an ammonia solution.

9. A process according to claim 7 or claim 8, characterized in that the pH of the reaction medium is maintained at a value of at least 9, more particularly in the range 9.5 to 11.

10. A process according to any one of claims 7 to 9, characterized in that an alumina is used which is stabilised with an element selected from rare earths, barium, silicon and zirconium.

11. A precursor of a compound according to any one of claims 1 to 6, characterized in that it is obtained by a process which comprises the following steps:
• preparing a first mixture comprising a cerium acetate and a zirconium salt or sol with a praseodymium salt or sol and optionally with a salt or a sol of another of said elements;
• bringing the first mixture into contact with a basic medium and maintaining the crystal medium formed at a basic pH;
• optionally, separating the precipitate formed from the reaction medium;
• forming a second mixture comprising the precipitate obtained and alumina;
• drying the second mixture formed by spray drying.

12. Use, for preparing a catalyst, in particular for the treatment of exhaust gases from internal combustion engines, of a compound according to any one of claims 1 to 6.

13. A catalyst, in particular for the treatment of exhaust gases from internal combustion engines, comprising a substrate and a coating, characterized in that the coating has been obtained using a compound according to any one of claims 1 to 6.
